# EUROPEAN PATENT APPLICATION

(11) **EP 4 653 217 A1**
(43) Date of publication of application: **26.11.2025**
(21) Application number: 24177665.7
(22) Date of filing: 23.05.2024
(51) Int. Cl.: B60K 1/04

(54) **BATTERY MULTIPACK TORQUE REDUCTION**

(71) Applicant: VOLVO TRUCK CORPORATION, 405 08 Göteborg (SE)
(72) Inventor: LUNDIN, Robert, 417 29 GÖTEBORG (SE)
(74) Representative: Kransell & Wennborg KB

(57) **Abstract**

A heavy-duty electric vehicle is provided, including a chassis frame (100), a first set (310) of battery packs mounted on a left side (134) of the chassis frame, a second set (320) of battery packs mounted on a right side (136) of the chassis frame, and a third set (330) of battery packs arranged below the chassis frame in a space formed between the first and second sets of battery packs. All of the first, second and third sets of battery packs include battery packs having a same size in a transverse direction of the chassis frame. The vehicle is further provided with bridging beams (370, 372, 374, 376) extending along a longitudinal direction of the chassis frame and arranged to bridge at least one gap (360, 362) formed between i) any of the first and second sets of battery packs and ii) the third set of battery packs.

## Description

### TECHNICAL FIELD

The disclosure relates generally to heavy-duty electric vehicles. In particular aspects, the disclosure relates to such a vehicle having an assembly of multiple battery packs with torque-reducing properties. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

As the volumetric energy storage density of contemporary battery solutions is often lower than that of fuel-based alternatives, a common challenge when constructing heavy-duty electric vehicles (such as electric trucks) is how to fit as many battery cells as possible within a limited volume and without exceeding weight constraints. As large tanks for liquid fuel (such as one or more diesel tanks) are no longer required, the space made available by removing such tanks is an obvious candidate for where to place the batteries, and multiple battery packs of battery cells are often provided suspended on both sides of the vehicle's chassis frame, using for example mounting brackets, in the space where the diesel tanks would otherwise be located.

A challenge with installing battery packs to the chassis frame of a vehicle includes how to ensure that the installation is stable, and to e.g. make sure that torque around the longitudinal direction of the chassis frame does not risk the installation collapsing. For battery packs mounted symmetrically with regards to the longitudinal direction of the chassis frame (i.e., on both the left and right sides of the chassis frame), this problem may be solved by for example providing connection rods in between the left and right battery packs, and/or by increasing the size and strength of the mounting brackets. Such solutions may however have the disadvantage that they increase the overall weight of the installation without adding to the overall energy storage capacity.

Another option for preventing such unwanted torque includes to use L-shaped battery packs that are provided and suspended from the chassis frame in left-right pairs, and which meet in the middle below the chassis frame. In addition to being more torque-stable/- preventing, such L-shaped battery packs also have the advantage that they increase the overall energy storage capability by utilizing also the space below the chassis frame for storage of battery cells. However, such L-shaped battery packs have the disadvantage that they must often be tailored to each specific vehicle type, and that little or no commonality is thus provided between vehicles of different types, such as between different electric truck variants. This may for example increase the cost of manufacturing, as different battery packs are needed for each vehicle type/variant.

The present disclosure aims at providing a solution for how to assemble mount battery packs to a chassis frame of a heavy-duty vehicle, in a way that at least partially overcomes some or all of the above-identified disadvantages with contemporary technology.

### SUMMARY

According to a first aspect of the present disclosure, there is provided a heavy-duty electric vehicle. The vehicle includes a chassis frame, a first set of battery packs mounted on a first lateral side of the chassis frame, and a second set of battery packs mounted on a second lateral side of the chassis frame opposite to the first (lateral) side. The vehicle further includes also a third set of battery packs. Each of the first and second sets of battery packs extend below the chassis frame and the third set of battery packs is arranged in a space formed between the first and second battery packs below the chassis frame. All of the first, second and third sets of battery packs includes battery packs that have a same size/dimension in transverse direction of the chassis frame. Further, the vehicle is provided with bridging beams that extend along a longitudinal direction of the chassis frame, and which are arranged to bridge at least one gap formed between i) any of the first and second sets of battery packs and ii) the third set of battery packs.

The first aspect of the disclosure may seek to solve the problem of how to reduce the negative effects of torque while still being able to improve overall energy storage capability and allow for an increased commonality between different battery packs and vehicle types/variants. A technical benefit may include that by using the bridging beams to fill any gap created between two battery packs, the negative effects of torque can be handled. This allows to use battery packs of a same type/dimension/size (at least in the transverse direction) even if such battery packs together do not span the full width of the installation, i.e. even when there is gaps between the battery packs in the transverse direction of the chassis frame. This thus reduces or eliminates the need for e.g. specially tailored L-shaped battery packs to utilize the space below the chassis frame and to prevent unwanted torque-effects, and without having to e.g. increase the size and weight of mounting brackets, and similar.

Optionally in some examples, including in at least one preferred example, at least one of the first and second sets of battery packs may be mounted to the chassis frame using a set of one or more mounting brackets. A technical benefit may include that such mounting brackets may be made simpler, less heavy and less costly, as the use of the bridging beams unloads some or all of the burden of the mounting brackets to handle torque introduced by the battery packs extending below the chassis frame.

Optionally in some examples, including in at least one preferred example, the one or more mounting brackets may be mounted to one or more longitudinal beams of the chassis frame. A technical benefit may include that the mounting brackets already present for other purposes, such as brackets for securing a fifth-wheel connection or similar to such beams, may be used also to mount battery packs to the chassis frame.

Optionally in some examples, including in at least one preferred example, the at least one of the one or more mounting brackets may be mounted to at least one of the bridging beams. A technical benefit may include that the installation may thus be secured even if e.g. the third set battery packs are not wide enough to reach all between the longitudinal beams of the chassis frame, and similar.

Optionally in some examples, including in at least one preferred example, the vehicle may include at least a first set of one or more bridging beams that bridge a first gap formed between the first set of battery packs and the third set of battery packs.

Optionally in some examples, including in at least one preferred example, the first set of battery packs may include a first subset of battery packs arranged primarily to the side of the chassis frame, and a second subset of battery packs arranged primarily to the side of and below the chassis frame. A technical benefit may include that multiple battery packs may thus be stacked on top of each other on each side of the chassis frame, allowing to use multiple smaller packs than e.g. if using only a single larger battery pack on each side of the chassis frame, which may further improve the commonality between vehicles of different types/variants.

Optionally in some examples, including in at least one preferred example, the first set of one or more bridging beams may include at least first and second bridging beams bridging the first gap, wherein the first gap is between the second subset of battery packs and the third set of battery packs.

Optionally in some examples, including in at least one preferred example, the first bridging beam may be arranged above the second bridging beam, and a first mounting bracket of the set of one or more mounting brackets may be mounted to the first bridging beam.

Optionally in some examples, including in at least one preferred example, the first mounting bracket may be mounted to a first longitudinal beam of the chassis frame.

Optionally in some examples, including in at least one preferred example, the vehicle may include at least a second set of one or more bridging beams bridging a second gap formed between the second set of battery packs and the third set of battery packs. A technical benefit may include that the third set of battery packs may thus be mounted more symmetrically with regards to the chassis frame, leading to an increased overall balancing of the installation.

Optionally in some examples, including in at least one preferred example, the second set of battery packs may include a third subset of battery packs arranged primarily to the side of the chassis frame, and a fourth subset of battery packs arranged primarily to the side of and below the chassis frame. A technical benefit may be the same as that already described for the first set of battery packs and first and second subset thereof.

Optionally in some examples, including in at least one preferred example, the second set of one or more bridging beams may include at least third and fourth bridging beams bridging the second gap, wherein the second gap is between the fourth subset of battery packs and the third set of battery packs.

Optionally in some examples, including in at least one preferred example, the third bridging beam may be arranged above the fourth bridging beam, and the second mounting bracket of the set of one or more mounting brackets may be mounted to the third bridging beam.

Optionally in some examples, including in at least one preferred example, the second mounting bracket may be mounted to a second longitudinal beam of the chassis frame. A technical benefit may be the same as for the mounting of the first mounting bracket to the second longitudinal beam of the chassis.

Optionally in some examples, including in at least one preferred example, the set of one or more mounting brackets may reduce or eliminate a torque deflection of the first and/or second sets of battery packs due to the presence of the at least one gap. A technical benefit may include that battery packs of same dimensions/types may still be used, even if their dimensions are such that gaps are created between the battery packs.

Optionally in some examples, including in at least one preferred example, the battery packs from each of the first, second and third sets of battery packs may be of a same type and/or with same dimensions. A technical benefit may include that a commonality between different vehicle types/variants, and also between battery packs within the same vehicle, may thus be increased.

Optionally in some examples, including in at least one preferred example, each of the first, second and third sets of battery packs may include a plurality of battery packs arranged along the longitudinal direction of the chassis frame. A technical benefit may include that multiple smaller battery packs may thus be used instead of e.g. a single battery pack spanning the full length of the available space in the longitudinal direction, leading to easier maintenance, installation, modularity and similar.

Optionally in some examples, including in at least one preferred example, the battery packs of the first, second and third sets may be configured to power an electric traction of the vehicle.

Optionally in some examples, including in at least one preferred example, the third set of battery packs may be suspended from the set of one or more bridging beams. A technical benefit may include that no adaptation of the other battery packs is thus needed to provide suspension for the third set of battery packs, as these may instead be suspended to the bridging beams. This may further increase commonality.

Optionally in some examples, including in at least one preferred example, the vehicle may further include at least one beam extending along the transverse direction of the chassis frame. The at least one beam may e.g. be arranged between the upper and lower battery packs of the first and second sets of battery packs. A technical benefit may include that the overall strength/rigidity of the installation may be improved.

According to a second aspect, there is provided a battery pack assembly for an electric heavy-duty vehicle, including the first, second and third sets of battery packs as described herein with reference to the first aspect, as well as the one or more bridging beams as also described herein for bridging at least one gap (in the transverse direction) between the third set of battery packs and one or both of the first and second sets of battery packs.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates an example conventional chassis frame of a heavy-duty vehicle.
**FIG. 2A** schematically illustrates an example of negative torque-effects in a contemporary installation of battery packs.
**FIG. 2B** schematically illustrates an example of how L-shaped battery packs are used in contemporary installations.
**FIG. 3A** schematically illustrates (in a perspective view) an example of multiple sets of similar/same battery packs mounted to the chassis frame using multiple longitudinal bridging beams as envisaged herein, according to one or more examples of the present disclosure.
**FIG. 3B** schematically illustrates (in a cross-section view) the example of FIG. 3A.
**FIG. 3C** schematically illustrates (in a cross-section view) an example of how at least one transverse beam may also be provided as part of the installation as envisaged herein, according to one or more examples of the present disclosure.
**FIG. 4** schematically illustrates an example heavy-duty vehicle as envisaged herein, according to one or more examples of the present disclosure.

### DETAILED DESCRIPTION

The detailed description set forth below provides information and examples of the disclosed technology with sufficient detail to enable those skilled in the art to practice the disclosure.

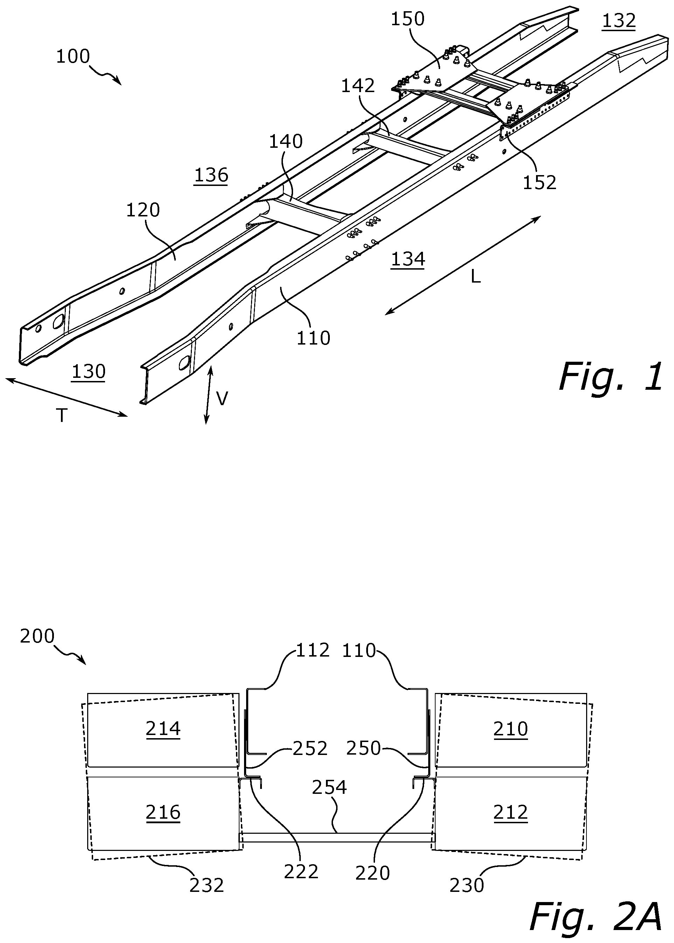

**FIG. 1** schematically illustrates a chassis frame 100 of a heavy-duty vehicle, for example a truck. The chassis frame 100 includes two longitudinal beams 110 and 120, i.e. a left beam 110 and a right beam 120 if seen towards a front side/end 130 of the chassis frame 100. The chassis frame 100 has a longitudinal direction (or axis) L extending between the front side 130 and an opposite back/rear side/end 132 of the chassis frame, a transverse direction (or axis) T extending perpendicular to the longitudinal direction L (between a left lateral side 134 and a right lateral side 136 of the chassis frame 100), as well as a vertical direction (or axis) V extending perpendicular to both the longitudinal direction L and the transverse direction T of the chassis frame 100. The chassis frame 100 may be provided with one or more cross bars/beams 140 and 142 extending between the longitudinal beams 110 and 120 in the transverse direction T. Whether one or more of the cross bars 140 and 142 are provided may for example be governed by whether the chassis frame 100 is for a vehicle supposed to be driven on flat, even ground, or whether e.g. the vehicle is an off-road vehicle supposed to be driven in terrain that requires further stabilization of the chassis frame 100. The chassis frame 100 may also, in some examples, be further equipped with a platform 150 for mounting of a so-called fifth-wheel connection, if the vehicle to which the chassis frame 100 belongs is e.g. supposed to tow a semitrailer or similar. The fifth-wheel platform 150 may be mounted to the (longitudinal beams 110 and 120) of the chassis frame 100 using mounting brackets 152.

With all components of the vehicle installed (not shown in FIG. 1), there may not be much space left for installation of battery packs, which thus poses a challenge when trying to electrify vehicles with chassis frames such as the chassis frame 100. For example, the space around the chassis frame at its back/rear end 132 will likely be occupied by the suspension of the rear wheel axle or axles (in case of a boogie), while the space at the front of the chassis frame 100 will likely be occupied by e.g. the suspension of the front axle, the steering, the driver cabin, and similar. Other components such as storage boxes (for snow chains and/or tooling), electrical wire harnesses, and similar will also occupy some of the available space around/in the chassis frame 100, with the result that there may be very limited space available for installation of battery packs required to provide electrical power to the traction of the vehicle. Conventional solutions for installation of battery packs often includes each battery pack being individually mounted to the chassis frame 100 using individual mounting brackets, which introduces a lot of "overhead" in terms of material and weight that may not be used to store energy. Conventional/contemporary solutions may also suffer from unwanted torque-effects due to the battery packs extending below the chassis frame 100, which may put unwanted stress on the mounting brackets used to mount the battery packs to the chassis frame 100.

**FIG. 2A** schematically illustrates a contemporary solution 200 of mounting battery packs to the chassis frame 100. Here, a first set of battery packs 210 and 212 are mounted on the left side 134 of the chassis frame 100, and a second set of battery packs 214 and 216 are mounted on the right side 136 of the chassis frame 100. The mounting is performed using longitudinal beams 220 and 222 fastened to the longitudinal beams 110 and 112 of the chassis frame using mounting brackets 250 and 252, respectively. As the space above the chassis frame 100 is often limited (due to their being e.g. a cabin, box-storage space or a trailer, or similar, above the chassis frame 100), the battery packs 210, 212, 214 and 216 are mounted to the side of, and to the side of and below the chassis frame 100. For example, in the example illustrated in FIG. 2A, the battery packs 210 and 214 are mounted to the side of the longitudinal beams 110 and 112, while the battery packs 212 and 216 are mounted to the side of and below the respective longitudinal beams 110 and 112, using only the brackets 250 and 252. As a consequence, due to such an asymmetrical arrangement relative the chassis frame 100, there will be resulting net-torque around the longitudinal direction L of the chassis frame 100, which may cause the installation to deform/twist as indicated by the dashed boxes 230 and 232. To counteract such unwanted torque-effects, the mounting brackets 250 and 252 are made stronger/heavier, and/or connection rods 254 are provided in between e.g. the lower battery packs 212 and 216. As mentioned earlier herein, this may have the disadvantage that the mounting brackets 250 and 252 will be more complex, expensive and heavy, and/or that the connection rods 254 may add to the overall weight of the installation without increasing the overall energy storage capability.

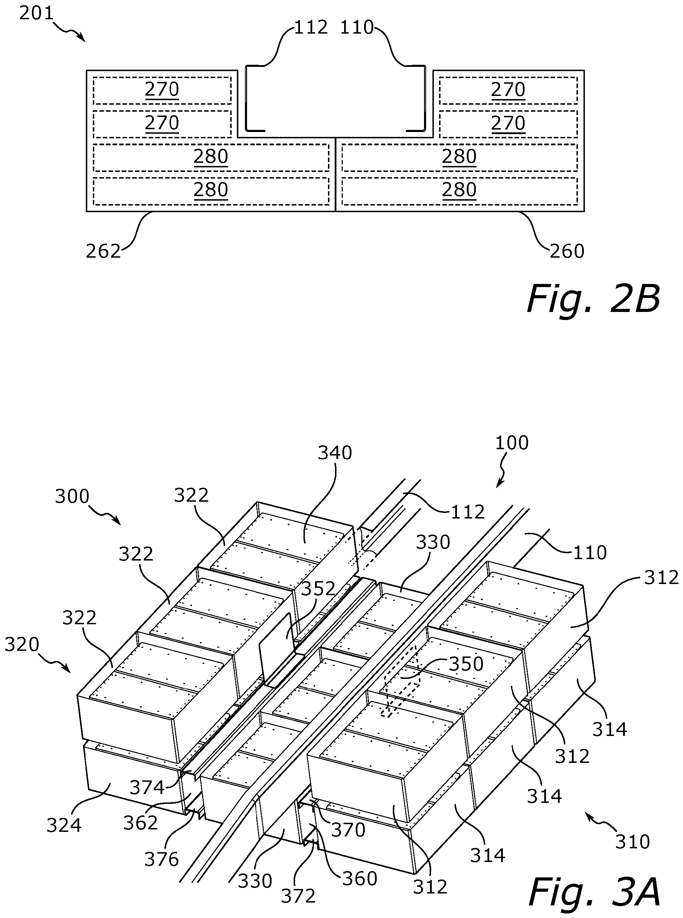

**FIG. 2B** schematically illustrates another contemporary solution 201 that at least partially overcomes the above-mentioned disadvantage of the solution 200. Here, specially tailored L-shaped battery packs 260 and 262 are provided, which includes battery modules of different size and types, such as for example more narrow battery modules 270 in the space besides the longitudinal beams 110 and 112, and more wider battery modules 280 in the space below the longitudinal beams 110 and 112. As the L-shaped battery packs 260 and 262 meet (e.g. at the center of) the space below the longitudinal beams 110 and 112 of the chassis frame 100, this space is better utilized as it is now filled with battery modules instead of e.g. connection rods 254, while the abutting of the L-shaped battery packs 260 and 262 in this region helps to prevent the unwanted torque-effects present in the solution 200 described above with reference to FIG. 2A. As already mentioned herein, the L-shaped battery packs 260 and 262 have the disadvantage that they are often required to be tailored to the specific vehicle they are to be used in, as e.g. the width of the chassis frame 100, the height of the longitudinal beams 110 and 112, and similar, may be different between different vehicle types/variants. This reduces the commonality of such solutions, as e.g. different types of battery modules (such as 270 and 280) are required in each battery pack 260, 262, and as the battery packs 260 and 262 may not necessarily fit in e.g. another vehicle of another type/variant. Having to provide different battery modules and/or battery packs for different vehicles may of course be undesirable, as it may be more complex and also more costly to manufacture, store and supply multiple battery packs and modules of different dimensions and type.

How the solution as envisaged herein improves upon such a situation will now be described in detail with reference first also to FIG. 3A.

**FIG. 3A** schematically illustrates an example of an envisaged improved assembly 300 of battery packs mounted to the chassis frame 100 of a heavy-duty vehicle (such as a truck). Here, the right longitudinal beam 112 is only partially indicated in FIG. 3A in order not to hide/obstruct the view of other components of the assembly 300.

The assembly 300 includes a plurality of battery packs 312, 314, 322, 324 and 330 that are all of a same size in the transverse direction T of the chassis frame 100. In particular, it is envisaged that all of the battery packs 312, 314, 322, 324 and 330 may be of a same type and/or have same dimensions, e.g. all battery packs may be equal to each other at least internally (such as all including only battery modules 340 of a same type, and similar). More specifically, a first set 310 of battery packs (including battery packs 312 and 314) is mounted to the first lateral (i.e. left) side 134 of the chassis frame 100, while a second set 320 of battery packs (including battery packs 322 and 324) is mounted to the second (and opposite) lateral (i.e. right) side 136 of the chassis frame 100. Each of the first and second sets 210 and 220 of battery packs extends below the chassis frame 100. As envisaged herein, the battery packs 312 and 314 may be referred to as respective (first and second) subsets of battery packs of the first set 310, while the battery packs 322 and 324 may correspondingly be referred to as respective (third and fourth) subsets of battery packs of the second set 320.

The assembly 300 further includes a third set 330 of battery packs (including battery packs 330) that is arranged in a space formed between the first and second sets 310 and 320 of battery packs below the chassis frame 100. The battery packs of the first, second and third sets 310, 320 and 330 are such that their widths do not span the full width of the chassis frame 100, and there is therefore a gap 360 formed between the first set 310 and third set 330 of battery packs, as well as a gap 362 formed between the second set 320 and third set 330 of battery packs.

The assembly 300 includes a set of one or more bridging beams 370, 372, 374 and 376 that extend along the longitudinal direction L of the chassis frame 100, and which are arranged to bridge the gaps 360 and 362 to prevent unwanted torque-effects (such as torque-induced deflection of the assembly 300 around the longitudinal direction L of the chassis frame 100). In this particular example, the bridging beams 370 and 374 are mounted to the respective longitudinal beam 110 (and 112, not shown in FIG. 3A) using corresponding mounting brackets 350 and 352, and the sets of battery packs are mounted to the bridging beams 370, 372, 374 and 376 and to each other to form the assembly 300 mounted to the chassis frame 100 using the mounting brackets 350 and 352. There may, of course be more than only two mounting brackets 350 and 352 for this purpose, and/or the mounting brackets 350 and 352 may be sized differently (for instance be made longer and/or wider) than illustrated in FIG. 3A as required to support the load of the battery packs. As envisaged herein, in some examples, the mounting brackets 350 and 352 may instead, or in addition, be fastened to e.g. the battery packs 312 and 314, and/or extend further down to mount to one or more of the battery packs 314, 324 and/or 330.

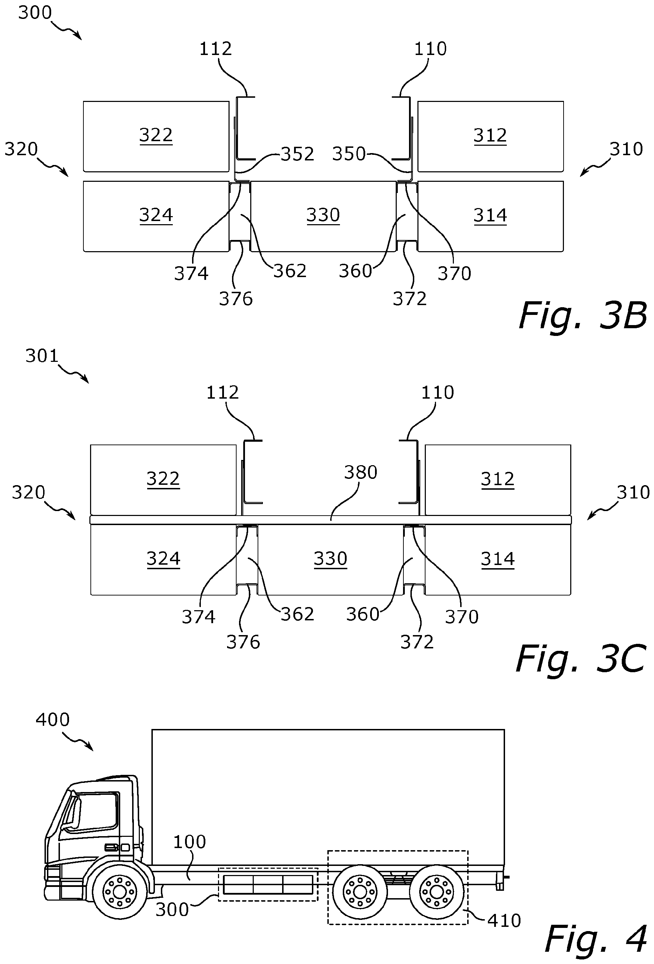

By providing the bridging beams 370, 372, 374, 376, the unwanted torque-effects may be handled even though the battery packs are not wide enough to span the full width of the assembly 300, i.e. even though there are the gaps 360 and 362 formed between the battery packs 314, 330 and 324. The proposed solution thus increases the commonality, as same battery packs may thus be used both to the side of the chassis frame 100 (battery packs 312 and 322), to the side and below of the chassis frame 100 (battery packs 314 and 324), as well as directly below the chassis frame 100 (battery packs 330), thereby increasing the overall energy storage density/capability of the assembly 300, as less available space is left unoccupied by battery packs/modules/cells. For a different vehicle having e.g. a wider or narrower chassis frame, the same battery packs may still be used by instead changing the widths of the bridging beams. For example, if the chassis frame of the different vehicle is wider than that shown in Figure 3A, wider bridging beams may be used to bridge the wider gap(s) created between the battery packs. Likewise, if the chassis frame of the different vehicle is instead narrower than that shown in FIG 3B, narrower bridging beams may instead be used if there is still gaps between the battery packs. Consequently, an improved commonality is improved as there is no need to provide different battery packs for different vehicles in order to prevent unwanted torque-effects.

Although illustrated as symmetrical in FIG. 3A, it is also envisaged that e.g. the positioning of the third set 330 of battery packs may be such that there is e.g. only a single gap formed between the third set 300 of the battery packs and only one of the first and second sets 310 and 320, and/or that the gaps 360 and 362 are still both present but not equal in width. For balancing reasons, it may however be beneficial to arrange all battery packs symmetrically in the left/right direction of the chassis frame 100. However, due to the space above the chassis frame 100 often being unavailable for mounting of battery packs, it is envisaged that the battery packs will most likely require to be installed asymmetrically in the top/bottom direction of the chassis frame 100, i.e. such that the sets of battery packs will extend more below the chassis frame 100 than above it. As described herein, the envisaged solution (such as illustrated by the assembly 300) will be capable of handling such an arrangement without suffering from unwanted torque-effects created due to such asymmetrical arrangements, especially in case of e.g. a crash/side-impact that would risk the mounting brackets breaking and the installation being dislodged from the chassis frame 100.

In some examples, there may be only a single bridging beam provided in each of the gaps 360 and 362, while in other examples there may be more than two (such as e.g. three, four, etc.) bridging beams provided in each of the gaps 360 and 362.

Although illustrated in FIG. 3A as each including multiple (three, in this particular example) battery packs arranged along the longitudinal direction L of the chassis frame 100, each set (or subset) of battery packs may of course include more or fewer number of battery packs, such as e.g. a single (longer) battery pack, two battery packs, or more than three battery packs. The proposed solution is applicable for any such configurations, as it may still serve to handle the otherwise unbridged gaps formed between the battery packs of the sets.

**FIG. 3B** schematically illustrates a cross-section view of the assembly 300, showing how the bridging beams 370, 372, 374 and 376 are provided to bridge the gaps 360 and 362 present between the battery packs 314 and 324 due to e.g. the width of the intermediate battery packs 330 not spanning the full width of the chassis frame 100. Here, it is further illustrated that e.g. the bridging beams 370 and 374 may in some examples be mounted directly to the respective longitudinal beam 110 and 112 of the chassis frame, and similar. It is also illustrated how the proposed solution is adaptable to chassis frames of different dimensions. For example, for higher longitudinal beams 110 and 112 than those illustrated in FIG. 3B, the length of the mounting brackets 350 and 352 (in the vertical direction V of the chassis frame 100) can be adapted to still make possible the mounting of the battery packs 312, 314, 322, 324 and 330 to the chassis frame 100, and similar.

As envisaged herein, that a battery pack (or set/subset of battery packs) is mounted "to the side and below of' the chassis frame includes the battery pack being both completely below and partially below the chassis frame 100. In the example illustrated in FIGS. 3A and 3B, the first subset 312 of battery packs is primarily to the side of the longitudinal beam 110 (and chassis frame 100), while the second subset 314 of battery packs is primarily to the side of and below the longitudinal beam 110 (and chassis frame 100). Here, "primarily" is to be understood when comparing two subsets of battery packs, i.e. the first subset 312 is not (as much) below the chassis frame 100 as the second subset 314, and is thus primarily "to the side of' and not primarily "to the side and below of" the chassis frame 100, and vice versa.

FIG. 3B further illustrates that in this particular example, the assembly 300, the third set of battery packs 330 is suspended from the bridging beams 370, 372, 374 and 376.

**FIG. 3C** schematically illustrates another example of an assembly 301 as envisaged herein. In this example, there is further provided at least one beam 380 that extends along the transverse direction T of the chassis frame 100, and which is here arranged between upper (312, 322) and lower (314, 324) battery packs of the first and second sets 310 and 320, and e.g. above the third set 330 of battery packs. The beam 380 may provide an improved rigidity/strength of the assembly 301, and e.g. help to improve crash-safety and similar. The at least one beam 380 may, in some examples, also enable to remove all battery packs from the chassis frame as a single unit, by unmounting the mounting brackets 350 and 352, and similar.

**FIG. 4** schematically illustrates an example vehicle 400 as envisaged herein, here in form of a box truck (e.g. a truck with a fixed cargo-space mounted to the truck). The vehicle 400 includes the chassis frame 100 and the assembly 300 (or 301) of same or similar battery packs mounted to the chassis frame 100 with the envisaged bridging beams (not shown) bridging gaps formed between the battery packs in the transverse direction of the chassis frame 100, to prevent unwanted torque-effects that could otherwise lead to collapsing of the assembly. The battery packs of the assembly 300 (or 301) may for example be arranged/configured to provide electrical power to the electrical traction 410 of the vehicle 400, including e.g. one or more electrical machines (such as electric motors) configured for this purpose.

Although illustrated in FIG. 4 as a (box) cargo-truck, a heavy-duty electric vehicle as envisaged herein may include any type of vehicle that has a chassis frame and requires mounting thereto of a plurality of battery packs. For example, the vehicle may be a construction equipment such as an excavator, dump truck, tractor, or similar, or e.g. some other form of truck such as a tow truck for a semitrailer or vehicle combination, a bus, or similar, that is or is to be electrified.

In summary of all of the above, the present disclosure improves upon currently available technology in that provides a solution which allows to use single types of battery packs for different types of vehicles, wherein gaps formed between the battery packs are bridged by bridging beams to avoid unwanted torque-effects. The proposed solution improves commonality, and allows to utilize more available space for battery cells. Phrased differently, the combination of a set of one or more battery packs below the chassis frame with the bridging beams allows to better utilize the space below the chassis frame in terms of energy storage, while at the same time providing a solution for how to counter unwanted torque-effects that would otherwise be generated due to battery packs mounted on the left and right of the chassis frame deflecting due to being asymmetrically arranged in the top/bottom direction of the chassis frame. In the envisaged solution, different types of e.g. chassis frames may be accounted for not by changing the size of the available battery packs, but by instead changing the size of the bridging beams, thus leading to the improved commonality and benefits thereof, including a reduced or eliminated need to provide different types of battery modules and/or battery packs for different vehicle types/variants.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:
Example 1: A heavy-duty electric vehicle (400), including: - a chassis frame (100); - a first set (310) of battery packs mounted on a first lateral side (134) of the chassis frame; - a second set (320) of battery packs mounted on a second lateral side (136) of the chassis frame opposite the first side, and - a third set (330) of battery packs, wherein each of the first and second sets of battery packs extend below the chassis frame and wherein the third set of battery packs is arranged in a space formed between the first and second sets of battery packs below the chassis frame, wherein all of the first, second and third sets of battery packs includes battery packs having a same size in a transverse direction (T) of the chassis frame, and wherein the vehicle is further provided with bridging beams (370, 372, 374, 376) extending along a longitudinal direction (L) of the chassis frame and arranged to bridge at least one gap (360, 362) formed between i) any of the first and second sets of battery packs and ii) the third set of battery packs.
Example 2: The vehicle of example 1, wherein at least one of the first and second sets of battery packs is mounted to the chassis frame using a set of one or more mounting brackets (350, 352).
Example 3: The vehicle of example 2, wherein the one or more mounting brackets are mounted to one or more longitudinal beams (110, 120) of the chassis frame.
Example 4: The vehicle of example 2 or 3, wherein the at least one of the one or more mounting brackets is mounted to at least one of the bridging beams.
Example 5: The vehicle of any one of the preceding examples, including at least a first set of one or more bridging beams (370, 372) bridging a first gap (360) formed between the first set of battery packs and the third set of battery packs.
Example 6: The vehicle of any one of the preceding examples, wherein the first set of battery packs includes a first subset of battery packs (312) arranged primarily to the side of the chassis frame and a second subset of battery packs (314) arranged primarily to the side of and below the chassis frame.
Example 7: The vehicle of examples 5 and 6, wherein the first set of one or more bridging beams includes at least first and second bridging beams (370, 372) bridging the first gap,
   wherein the first gap is between the second subset of battery packs (314) and the third set of battery packs.
Example 8: The vehicle of example 7 depending on example 4, wherein the first bridging beam (370) is arranged above the second bridging beam (372), and wherein a first mounting bracket (350) of the set of one or more mounting brackets is mounted to the first bridging beam.
Example 9: The vehicle of example 8 depending on examples 3 and 4, wherein the first mounting bracket is mounted to a first longitudinal beam (110) of the chassis frame.
Example 10: The vehicle of any one of the preceding examples, including at least a second set of one or more bridging beams (374, 376) bridging a second gap (362) formed between the second set of battery packs and the third set of battery packs.
Example 11: The vehicle of any one of the preceding examples, wherein the second set of battery packs includes a third subset of battery packs (322) arranged primarily to the side of the chassis frame and a fourth subset of battery packs (324) arranged primarily to the side of and below the chassis frame.
Example 12: The vehicle of examples 10 and 11, wherein the second set of one or more bridging beams includes at least third and fourth bridging beams (374, 376) bridging the second gap, wherein the second gap is between the fourth subset of battery packs and the third set of battery packs.
Example 13: The vehicle of example 12 depending on example 4, wherein the third bridging beam (374) is arranged above the fourth bridging beam (376), and wherein a second mounting bracket (352) of the set of one or more mounting brackets is mounted to the third bridging beam.
Example 14: The vehicle of example 13 depending on examples 3 and 4, wherein the second mounting bracket is mounted to a second longitudinal beam (120) of the chassis frame.
Example 15: The vehicle of any one of the preceding examples, wherein the set of one or more mounting brackets reduces or eliminates a torque deflection (230, 232) of the first and/or second sets of battery packs due to the presence of the at least one gap.
Example 16: The vehicle of any one of the preceding examples, wherein battery packs from each of the first, second and third sets of battery packs are of a same type and/or with same dimensions.
Example 17: The vehicle of any one of the preceding examples, wherein each of the first, second and third sets of battery packs includes a plurality of battery packs arranged along the longitudinal direction of the chassis frame.
Example 18: The vehicle of any one of the preceding examples, wherein the battery packs of the first, second and third sets of battery packs are configured to power an electric traction (410) of the vehicle.
Example 19: The vehicle of any one of the preceding examples, wherein the third set of battery packs is suspended from the set of one or more bridging beams.
Example 20: The vehicle of any one of the preceding examples, further including at least one beam (380) extending along the transverse direction of the chassis frame.
Example 21: A battery pack assembly (300) for an electric heavy-duty vehicle, including the first, second and third sets of battery packs as described herein, as well as the one or more bridging beams as also described herein for bridging at least one gap (in the transverse direction) between the third set of battery packs and one or both of the first and second sets of battery packs.

## Claims

1. A heavy-duty electric vehicle (400), comprising:
- a chassis frame (100);
- a first set (310) of battery packs mounted on a first lateral side (134) of the chassis frame;
- a second set (320) of battery packs mounted on a second lateral side (136) of the chassis frame opposite the first side, and
- a third set (330) of battery packs,
wherein each of the first and second sets of battery packs extend below the chassis frame and wherein the third set of battery packs is arranged in a space formed between the first and second sets of battery packs below the chassis frame,
wherein all of the first, second and third sets of battery packs comprises battery packs having a same size in a transverse direction (T) of the chassis frame,
and wherein the vehicle is further provided with bridging beams (370, 372, 374, 376) extending along a longitudinal direction (L) of the chassis frame and arranged to bridge at least one gap (360, 362) formed between i) any of the first and second sets of battery packs and ii) the third set of battery packs.

2. The vehicle of claim 1, wherein at least one of the first and second sets of battery packs is mounted to the chassis frame using a set of one or more mounting brackets (350, 352).

3. The vehicle of claim 2, wherein the one or more mounting brackets are mounted to one or more longitudinal beams (110, 120) of the chassis frame.

4. The vehicle of claim 2 or 3, wherein the at least one of the one or more mounting brackets is mounted to at least one of the bridging beams.

5. The vehicle of any one of the preceding claims, comprising at least a first set of one or more bridging beams (370, 372) bridging a first gap (360) formed between the first set of battery packs and the third set of battery packs.

6. The vehicle of any one of the preceding claims, wherein the first set of battery packs comprises a first subset of battery packs (312) arranged primarily to the side of the chassis frame and a second subset of battery packs (314) arranged primarily to the side of and below the chassis frame.

7. The vehicle of claims 5 and 6, wherein the first set of one or more bridging beams comprises at least first and second bridging beams (370, 372) bridging the first gap, wherein the first gap is between the second subset of battery packs (314) and the third set of battery packs.

8. The vehicle of claim 7 depending on claim 4, wherein the first bridging beam (370) is arranged above the second bridging beam (372), and wherein a first mounting bracket (350) of the set of one or more mounting brackets is mounted to the first bridging beam.

9. The vehicle of claim 8 depending on claims 3 and 4, wherein the first mounting bracket is mounted to a first longitudinal beam (110) of the chassis frame.

10. The vehicle of any one of the preceding claims, comprising at least a second set of one or more bridging beams (374, 376) bridging a second gap (362) formed between the second set of battery packs and the third set of battery packs.

11. The vehicle of any one of the preceding claims, wherein battery packs from each of the first, second and third sets of battery packs are of a same type and/or with same dimensions.

12. The vehicle of any one of the preceding claims, wherein each of the first, second and third sets of battery packs comprises a plurality of battery packs arranged along the longitudinal direction of the chassis frame.

13. The vehicle of any one of the preceding claims, wherein the battery packs of the first, second and third sets of battery packs are configured to power an electric traction (410) of the vehicle.

14. The vehicle of any one of the preceding claims, wherein the third set of battery packs is suspended from the set of one or more bridging beams.

15. The vehicle of any one of the preceding claims, further comprising at least one beam (380) extending along the transverse direction of the chassis frame.
